Europäisches Patentamt

(19) European Patent Office

Office européen des brevets

(11) Publication number : **0 304 482 B1**

# (12) EUROPEAN PATENT SPECIFICATION

(45) Date of publication of patent specification :
26.08.92 Bulletin 92/35

(51) Int. Cl.⁵ : **B32B 3/26**

(21) Application number : **88903504.4**

(22) Date of filing : **23.02.88**

(86) International application number :
**PCT/US88/00642**

(87) International publication number :
**WO 88/06520 07.09.88 Gazette 88/20**

(54) A MULTILAYER ARTICLE HAVING IMPROVED PRINTABILITY AND MARK PERMANENCY AND A METHOD OF MAKING.

(30) Priority : **24.02.87 US 17520**

(43) Date of publication of application :
**01.03.89 Bulletin 89/09**

(45) Publication of the grant of the patent :
**26.08.92 Bulletin 92/35**

(84) Designated Contracting States :
**BE CH DE FR GB IT LI NL SE**

(56) References cited :
**EP-A- 0 156 532**
**DE-A- 3 303 427**
**FR-A- 2 570 988**
**US-A- 3 930 099**
**US-A- 4 049 107**
**US-A- 4 112 178**
**US-A- 4 278 483**
**PATENT ABSTRACTS OF JAPAN, vol. 7, no. 250 (M-254)[1395], 8th November 1983; & JP-A-58 136 482 (CANON K.K.) 13-08-1983**
**PATENT ABSTRACTS OF JAPAN, vol. 7, no. 250 (M-254)[1395], 8th November 1983; & JP-A-58 136 478 (CANON K.K.) 13-08-1983**

(73) Proprietor : **RAYCHEM CORPORATION**
**300 Constitution Drive**
**Menlo Park California 94025 (US)**

(72) Inventor : **HMELAR, Ann, M.**
**3085 Middlefield Road, 21**
**Palo Alto, CA 94306 (US)**
Inventor : **LAU, Aldrich, N., K.**
**648 Tramway Drive**
**Milpitas, CA 95035 (US)**
Inventor : **SCHWARTZ, Lawrence, D.**
**1085 Continental Drive**
**Menlo Park, CA 94025 (US)**
Inventor : **WEBER, C., Joseph**
**105 Atherwood Avenue**
**Redwood City, CA 94061 (US)**

(74) Representative : **Dlugosz, A.C. et al**
**Raychem Limited Intellectual Property Law Department Faraday Road Dorcan**
**Swindon Wiltshire (GB)**

## Description

Various solutions have been proposed for improving the printability of polymeric materials. Thus, for example, Blok et al. U.S. patent no. 4,461,793 and U.K. patent application no. 2,117,270A have proposed ink receptive coatings on heat recoverable articles.

Dhingra U.S. patent no. 4,427,877 and European patent application no. 076130, for example, have proposed the inclusion of particulates which cause a roughening of the surface of the material, thereby improving the printability of the material.

In European patent application no. 156532, it is proposed that a porous layer be joined to a substrate. The porous layer improves the printability of the laminate.

In Williams et al. U.S. patent no. 3,839,516, a porous film is created by contacting the film with a swelling agent and then stretching the film.

Druin et al. U.S. patent no. 3,801,404 and Isaacson et al. U.S. patent no. 3,558,764 propose the formation of a microporous film by cold stretching.

In Karabedian U.S. patent no. 4,581,262, a laminate of a thick closed-cell foam layer and a decoratable solid skin layer is proposed.

Ashcraft et al. U.S. patent nos. 4,377,616 and 4,438,175 and Duncan U.S. Patent no. 4,582,736, for example, propose a multilayer film consisting of a void-free layer bonded to a stratified void layer wherein the void layer is formed by biaxially orienting a matrix material containing void-initiating particles.

Japanese Kokai 61-37827 proposes a porous resin film for printing wherein the porosity is formed by the leaching out of a powder. takes U.S. patent no. 4,226,886 proposes an ink-retentive pad which is formed by the leaching out of a particulate material.

The above references do not appear to have addressed the issue of mark permanency.

Heat recoverable articles, suitable for use as markers, are disclosed in, for example, Evans U.S. Patent No. 3,894,731. One problem that is associated with printing information on markers by means of, for example, a typewriter is that the characters applied to the markers are not initially permanent and thus are subject to removal or smearing by rubbing and abrasion. According to Evans, however, the characters may be rendered indelible by exposing the printed marker sleeves to an infrared radiation source, for example a quartz tungsten filament lamp, for a short period of time during which the temperature of the print portions of the markers is believed to be raised to a temperature of about 315°C. A difficulty with this method, of course, is that premature recovery of the markers may occur upon exposure to the heat from the infrared radiation source.

All of the above patents and publications are incorporated by reference herein.

In spite of the advances in surface treatment of polymeric materials, there nevertheless remains a need for polymeric articles which are mechanically strong, have good printability and mark permanency and are simple to produce.

The objects of the invention have been achieved by providing a heat-recoverable article having improved printability and mark permanency and a method of making such an article.

According to the invention there it disclosed a heat-recoverable article comprising:

a first substantially non-porous, heat-recoverable polymeric layer bonded to a second substantially porous, absorbent, polymeric layer wherein:

(a) at least the second layer it crosslinked; and

(b) the second layer is relatively thinner than the first layer;

and wherein the second layer contains pores large enough to capture the pigment particles of inks and dyes applied to it and is sufficiently absorbent with respect to inks or dyes such that an exposed surface thereof is capable of being marked with indicia or markings that are resistant to organic solvents, smearing and abrasion.

Figure 1 is a perspective view of a section of a heat-recoverable article according to the invention.

Figure 2 it an enlarged cross-sectional view of the heat-recoverable article in Figure 1.

Figure 3 is a perspective view of a heat-recoverable article according to the invention wherein the article is an extruded dual wall tubing.

Figure 4 is an enlarged cross-sectional view of another embodiment of a heat-recoverable article according to the invention

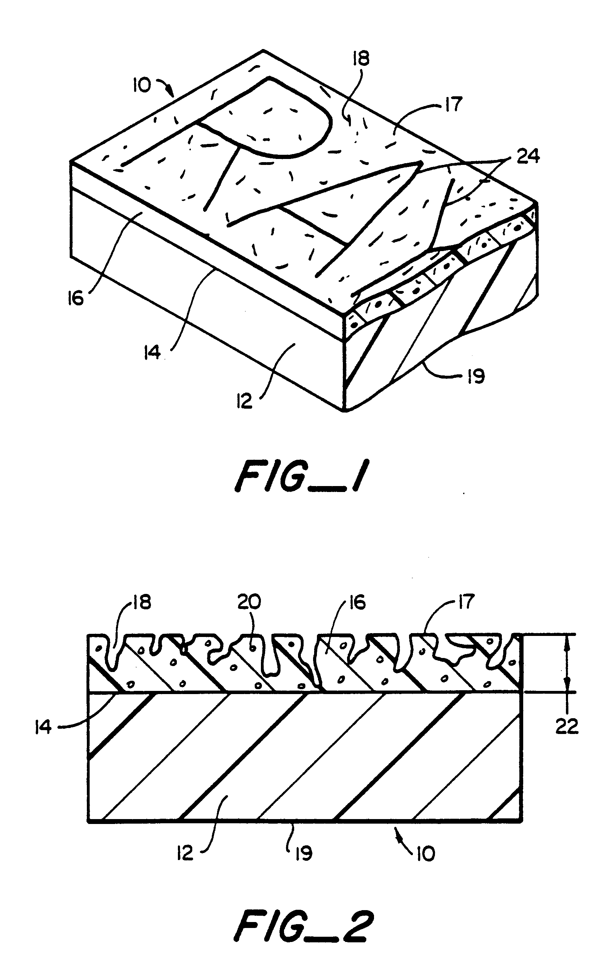

Referring to the Figures in more detail and particularly referring to Figure 1, there is shown a heat-recoverable article generally indicated by 10. The heat-recoverable article comprises a first substantially non-porous layer 12 bonded 14 to a second porous absorbent layer 16.

While not shown in the Figures, there may be one or more additional layers of material between the first layer 12 and the second layer 16. The additional layer or layers may include, for example, adhesives or primers. Such additional layer or layers may be necessary when the polymeric materials making up the first and second layers are incompatible.

It is most preferred, however, that the first layer 12 and the second layer 16 are intimately and directly bonded to one another.

It should be understood throughout this specification that "directly bonded" is to mean that first layer 12 and second layer 14 are joined to one another without the intervention of an intermediate tie layer such as a primer of an adhesive.

It should further be understood throughout this specification that "intimately bonded" is to mean that first layer 12 and second layer 14 are physically (eg. fused) or chemically bonded to each other. The simplest way to achieve this result is to choose polymeric materials for the first and second layers which are compatible with each other. For example, the polymeric materials making up the first and second layers may be the same material. Alternatively, the polymeric materials may be dissimilar so long as they fuse during, for example, co-extrusion.

Completely incompatible polymeric materials may also be chosen; in this case, however, a compatibility agent may have to be added to one or both of the polymeric materials so that intimate bonding may be effected. Such compatibility agents are well known to those skilled in the art.

The fact that the first layer 12 is preferably intimately and directly bonded to second layer 16, of course, does not exclude additional layers of material, such as adhesives, which may be bonded to first layer 12 on surface 19, the surface opposite from bond area 14.

The second layer 16 is relatively, and preferably much, thinner than the first layer 12. This is important because it is the first layer which provides the structural integrity of any subsequent article to be formed. The purpose of the second layer is merely for improving the printability and mark permanency of the article. Thus, it is desirable for the second layer to be as thin as possible.

Referring now to Figure 2 wherein a cross-sectional view of the article in Figure 1 is shown in greater detail, the porosity 18 in the second layer 16 is more visible. It can also be seen that the second layer 16 contains a small amount of leachable particulate material 20. The second layer 16 has been previously leached by subjecting the article to a suitable solvent so as to remove a portion of the particulate material. It can thus be appreciated that the porosity 18 is due to the fact that a Portion of the leachable particulate material 20 has in fact been leached out. Where the leachable particulate material 20 has not been leached out, there will be no pores in the material. While not absolutely essential to the invention, it is nevertheless preferred that the leachable particulate material 20 is incompatible with the second layer 16 so that there is no physical or chemical bond formed between the leachable particulate material 20 and the second layer material 16. In this way it is easier to select a solvent which will leach only the leachable particulate material 20 without affecting the polymeric matrix material.

At least one, and preferably both, of the first 12 and second 16 layers should be cross-linked.

Heat-recoverable articles are articles that have been changed from an original heat-stable configuration to a dimensionally heat-unstable configuration. Such an article will revert, or attempt to revert, to its original heat-stable configuration on the application of heat alone. Examples of such heat-recoverable articles are found in Currie U.S. Patent No. 2,027,962, CooK et al. U.S. Patent No, 3,086,242 and Clabburn U.S. Patent No. 3,721,749, the disclosures of which are incorporated herein by reference.

One method of making a heat-recoverable article involves the formation of a polymeric article followed by crosslinking of the polymer. The crosslinking can be effected by chemical means, e.g. with peroxides, or by irradiation or a combination of the two. Radiation employed can be of various types including charged particles e.g. alpha particles or high energy electrons and electromagnetic radiation e.g. gamma or ultraviolet radiation. Sunsequent heating of the material will melt the crystals in the crystalline thermoplastic material or significantly lessen other internal molecular forces to an extent sufficient to allow distortion of the article. Upon cooling of the heated and distorted article, there is obtained a product which remains in its distorted shape while at room temperature due to the reformation of strong interchain forces such as crystallinity. Upon reheating, the crosslink forces become dominant and the material tends to recover to its original geometry.

When irradiation is used, doses of any desired amount can be used although, generally a dosage of from 1 to 50, preferably 2 to 20 Mrads will be sufficient.

As stated earlier, the thickness 22 of the second layer 16 should be as thin as possible. It is preferred that the maximum thickness of the second layer should be about .005 inch and the minimum thickness should be about .0005 inch. In this way the thickness 22 of the second layer 16 has little effect on the overall structural integrity of the article.

While the second layer should in general be absorbent, it is most preferred that it be absorbent with respect to inks and dyes. The reason for this is that when indicia or markings 24 are applied to the surface 17 of the second layer 16 such as by a typewriter (or other printing apparatus), the ink from the typewriter ribbon is absorbed into the pores 18 of the second layer 16. It has been found that when the ink is in fact captured by the porosity 18 of the second layer 16 that there is greatly improved retention of the marking or indicia 24 on the article 10. While the pores per se are extremely important to the invention, the dimensions of the pores are not extremely critical. However, it is necessary that the majority of pores be generally in the range of 1 to 10 microns. That is it is important that the size of the pores be large enough to capture the pigment particles of the inks and dyes applied to the exposed surface 17 of the second layer 16.

In regards No the retention of the markings or indicia 24 on the article 10, it is most preferred that the markings or indicia are resistant to organic solvents, smearing and abrasion. Resistance to organic solvents and abrasion are direct indications of the mark permanency of the markings or indicia. Resistance to smearing refers to the ability of the markings or indicia not to smear (or at least smear very slightly) when rubbed, for example with a thumb, immediately after printing. Such a property is certainly desirable since if the markings or indicia were capable of smearing immediately after printing, there would be the possibility of .smearing during handling which might render the markings or indicia unreadable. The present invention avoids that possibility.

Resistance to organic solvents and abrasion are very important properties. In particular, the article may be used in a very demanding market place, e.g. the military, where resistance to organic solvents and abrasion is of paramount importance. In this regard, it is necessary for the article to meet the requirements of Military specification MIL-M-81531 and Military Standard MIL-STD-202, both of which are incorporated by reference herein. With respect to abrasion, Military Specification MIL-M-81531 requires that the markings or indicia be readable at a distance of 14 inches after being rubbed with an eraser 10 to 20 times, depending on the material.

With respect to resistance to organic solvents, Military Standard MIL-STD-202 requires that the markings or indicia be readable at a distance of at least 6 inches after being immersed in a variety of organic solvents and then brushed with a toothbrush. These organic solvents include: mixtures of isopropyl alcohol and mineral spirits; an azeotrope mixture of trichlorotrifluoroethane (FREON® TF, a registered trademark of E. I. DuPont de Nemours) and methylene chloride; 1,1,1--trichloroethane; and an aqueous solution of butyl-cellosolve and monoethanolamine.

In addition to meeting the requirements of Military Standard MIL-STD-202, it is Preferred that the markings or indicia be resistant to removal during prolonged immersion in the following organic solvents: JP-4 fuel (kerosene), Skydrol 500™ (a phosphate ester hydraulic fluid available from Monsanto Company), hydraulic fluid (petroleum based), aviation gasoline, lubricating oil (ester based) and anti-icing fluid (an aqueous mixture of glycols). These organic solvents are further specified in the Raychem Corporation Specification RT-1800/2, which is incorporated by reference herein.

It is also preferred that the marked article according to the invention is resistant to dichloromethane which is representative of the class of halogenated solvents which includes 1,1,1--trichloroethane and FREON mixtures.

It is, of course, anticipated that the marked article according to the invention will be resistant to many other organic solvents as well as many inorganic solvents.

It should be understood, then, that whenever throughout this specification the markings or indicia are stated to be resistant to organic solvents, smearing and abrasion, such resistance to organic solvents, smearing and abrasion shall be defined as indicated above.

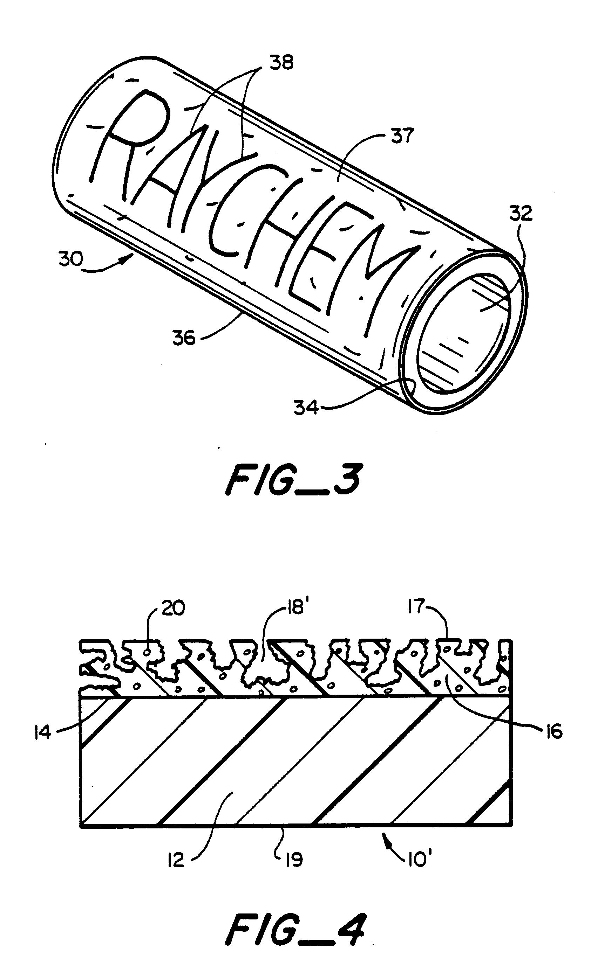

The articles of the invention may be formed in a number of ways. Thus, for example the first and second layers may be formed by lamination. Alternatively, the first and second layers may be formed by extrusion or co-extrusion. It is also believed possible for the second layer to be formed by a coating process. However, it is preferred that the first and second layers be formed by co-extrusion as this is a more efficient, economical process. It is most preferred that the extruded article be a dual wall tubing as shown in Figure 3. Thus, there is a dual wall tubing, generally indicated by 30, in which there is a first layer 32 which is intimately and directly bonded 34 to a second layer 36. The surface 37 of layer 36 is porous so that it is readily absorbent with respect to a mark 38 which is placed upon the article 30.

The polymeric materials of the first and second layers may be made from a variety of materials such as thermoplastics, elastomers, and thermoplastic elastomers. This would include most polymeric materials except for thermoset polymeric materials.

Referring again to Figures 1 and 2, there is the first substantially non-porous layer 12 which is bonded (preferably intimately and directly bonded) 14 to a second porous absorbent layer 16. The second layer 16 is relatively thinner than the first layer 12. Now particularly referring to Figure 2, it can be seen that the volume of porosity 18 in a second layer 16 is the greatest on the surface 17 of the second layer which is farthest away from the interface 14 between the first 12 and second 16 layers. This porosity also gradually decreases towards the interface 14 between the first 12 and second 16 layers.

This porosity 18 may be formed as discussed previously wherein the second layer 16 contains a leachable particulate material 20. In this case it can be appreciated that the porosity 18 forms as a result of the dissolution of the leachable particulate material 20 and transport of the dissolved particulate material away from the second layer 16.

The second layer 16 is relatively, and preferably much thinner than the first layer 12. It is preferred that the second layer have a maximum thickness of about .005 inches. At least one, and preferably both of the first 12 and second 16 layers is crosslinked. Crossliking may be by chemicals or be radiation as discussed previously.

A cross-section of the article is shown in Figure 2. It can be seen that the second layer 16 has a substantial amount of porosity 18. It is most preferred that the porosity 18 of the second layer 16 be formed by leaching out a leachable particulate material, as previously discussed. However, the porous second layer 16 may be formed in other ways as will be discussed hereafter.

It is most preferred that the second layer 16 is absorbent with respect to inks or dyes. Thus, an exposed surface 17 of the second layer 16 may, and preferably will contain printed indicia thereon. Due to the fact that the ink or dye making up the printed indicia is absorbed by the porosity 18, the printed indicia is resistant to removal by smearing immediately after printing. Further, the printed indicia is resistant to abrasion and organic solvents. Accordingly, the printed indicia has acquired a certain mark permanency.

It is most preferred that the first 12 and second 16 layers be formed by extrusion or co-extrusion. It is further preferred that the extruded or co-extruded article be a dual-wall marker as shown in Figure 3. Alternatively, the extruded or co-extruded article may be formed in a planar configuration, in which case the article may be a wrap-around marker (not shown).

While most leachable particulate materials will be satisfactory, the leachable particulate material is preferably chosen so that it is incompatible with the polymeric matrix material. This makes the selection of a suitable solvent much easier. With this constraint in mind, the leachable particulate material may be chosen so that it is leachable by water, acid, base or organic solvents. A water-soluble particulate material would be very convenient in use. For example, if the leachable particulate material was water-soluble and the first and second layers were co-extruded, then a substantial portion of the particulate material would be leached out during immersion in the water trough after extrusion. Further amounts of the particulate material could be leached out during subsequent processing such as immersion or expansion, if the material were to be heat-shrinkable.

No matter what the solvent/leachable particulate material combination, it is desirable to leach out as much of the particulate material as possible (although it is unlikely that all of the particulate material will be leached out). In this way, the structural properties of the second layer will closely approximate the structural properties of the first layer. It should be understood, however, that perfectly acceptable properties result when only a portion of the particulate material is leached out. It ink just necessary to leach out sufficient particulate material so as to obtain a surface layer of porosity which is absorbent with respect to inks or dyes.

The article may be marked by applying an ink to the exposed surface 17 of the second layer 16. Thus, as can be been in, for example, Figures 1 and 3, a mark 24,38 has been applied to the surface of the article 10,30 by a typewriter or some other printing apparatus so that ink is contacted with the exposed surface 17,37 of the second layer 16,36. In this way, the ink ink allowed to penetrate into the porosity 18 of the second layer and become entrapped therein.

Thereafter, the mark is resistant to removal by organic solvents, smearing and abrasion.

The first and second layers may be bonded by lamination or preferably by extrusion or most preferably by coextrusion. A particularly preferred article of the invention ink the extruded or coextruded dual wall tubing 30 as shown in Figure 3.

It is preferred that the maximum thickness of the second layer is about .005 inch and the minimum thickness is about .0005 inch. Of course it is desirable to have the thickness of the second layer as thin as possible in that the sole purpose of the second layer is for improving the printability and mark permanency of the article.

While there are many suitable polymeric materials for the first and second layers, it is preferred that the polymeric materials of the first and second layers be chemically compatible with each other. Thus, the materials of the first and second layers may be any of the thermoplastics, elastomers or thermoplastic elastomers.

It has been found that the printability and mark permanency of the article is noticeably improved when there is at least about 5 volume% of leachable particulate material added to the second layer. Usually all of the leachable particulate material will not in fact be leached out due to the fact that some of the leachable particulate material, as shown for example in Figure 2, may not be contacted by the solvent so that it will not be dissolved. Accordingly, when there is about 5 volume% of leachable particulate material in the starting material, there will usually be less than about 5 volume% of porosity produced. It is generally believed that efficacious results will be produced when the second layer contains about 5 to 90 volume% of leachable particulate material. It is also believed that even better results can be obtained when there is about 20 to 60 volume% of leachable particulate material. The most preferred results will be obtained, et is believed, when there is about 30 to 50 volume% of leachable particulate material.

It should, of course, be understood that the most preferred volume percents of leachable particulate material will vary depending on the particulate material itself and the polymeric material. This is due to the fact that certain polymeric materials can be more highly loaded than other polymeric materials. For a given polymeric material, the preferred volume percent of leachable particulate material can be easily determined by those skilled in the art.

Figure 4 ink an enlarged cross-sectional view of another embodiment of a heat-recoverable article according to the invention. A method of making this embodiment ink as follows. The first step is bonding (preferably intimately and directly bonding) a first layer 12 of polymeric material to a second layer 16 of polymeric material wherein: (a) the second layer 16 ink relatively thinner than the first layer 12; and (b) the second layer 16 contains a foaming agent. The next step in the method comprises foaming the second layer 16 No as to cause the second layer 16 to become porous and absorbent wherein the first layer 12 remains substantially free of porosity.

Such an open cell porous structure produced by the step of foaming ink shown in Figure 4. As is apparent, when a foaming agent is added to the material, the porosity 18'shown in Figure 4 ink very similar to porosity 18 shown in Figure 2. Thus, foaming of the porous second layer ink believed to be a viable alternative in the making of the dual layer article.

As mentioned above with reference to Figure 2, surface 19 of first layer 12, ie. the surface opposite the second layer (herein referred to as the "opposite surface"), may be coated with, for example an adhesive. This can be particularly advantageous in embodiments of the invention in which the heat-recoverable article ink tubular. Such articles may be installed over various substrates, such as wires, appropriately marked to identify the wire. At times such a tubular article, or sleeve, is positioned over a wire where it has been connected to another wire or terminal block. In such instances, the insulation of the wire at the end thereof may have been removed. The sleeve provides insulation over this section after it has been installed. To prevent ingress of moisture or other contaminants, it ink desirable to adhere the sleeve to the wire, eg. by means of an adhesive, in particular a heat activatable adhesive by heating the sleeve to cause it to shrink onto the wire.

This ability to seal the sleeve into the wire ink not possible with conventional marker sleeves as these require a permatization step, which involves heating, during the process of marking the sleeve. This would cause the adhesive to melt and flow prematurely. For this reason such sleeves are not provided with adhesive and are not sealed to the wires, or other substrates, onto which they are installed.

The advantages and features of the invention will become more apparent or referring to the following illustrative examples.

Example 1

A composition was compounded consisting of the following ingredients: 56 wt% polyethylene, 30 wt% flame retardant and other additives, and 14 wt% stabilizers, pigments and cross-linking coagents. To this composition varying amounts of sodium chloride having an average particle size of about 2 microns were added so that the amount of sodium chloride in the sodium chloride/polyethylene composition varied from 0 to 60 wt% or 0 to about 47 vol%. A second composition was compounded consisting of the polyethylene composition without any addition of the sodium chloride. Several samples were extruded in a single layer of each of the two groups of compositions.

The samples containing sodium chloride were leached by immersion in water.

Marks were then applied to each of the samples by a typewriter. Immediately after printing on each of the samples the samples were rubbed with a thumb to test the smearing and readability of the mark. The samples were then abraded (by a brush) in the presence of an organic solvent which was dichloromethane.

It was found that the compositions containing the leached sodium chloride began to show an improvement in printability, mark permanency and non-smearing characteristics at about 5 volume (about 7 wt%) of sodium chloride. Beyond about 5 volume (about 8wt%) of sodium chloride the improvement continued until the limit of sodium chloride was reached. It was found that no greater improvement of the printability of the material occurred when there was more than about 47 vol% (or 60 wt%) of sodium chloride. Additionally, greater amounts of sodium chloride in the polyethylene composition would drastically effect the integrity and processability of the material.

In sum, the addition of the leachable particulate material dramatically improved the printability, mark permanency and non-smearing characteristics of the material.

Example 2

A composition was compounded consisting of the following ingredients: 93 wt% polyvinylidene fluoride polymer blend, and 7 wt% stabilizers, pigments and cross-linking agents. To this was added an amount of sodium chloride having an average particle size of about 2 microns so that the amount of sodium chloride in the sodium chloride/polyvinylidene fluoride blend was about 50wt% (44.7 vol%). A sample was extruded in a single layer from the sodium chloride/ polyvinylidene fluoride blend. Another sample was prepared from the polyvinylidene fluoride blend only. The sample containing the sodium chloride was leached by immersion in water.

Marks were applied by a typewriter to each of the samples and then they were rubbed with a thumb to determine smearing. In the sample containing the leached sodium chloride there was no smearing at all immediately after printing while the sample not containing the leached sodium chloride smeared. After abrading each of the samples in the presence of an organic solvent which was dichloromethane, it was found that the sample containing the leached sodium chloride did not suffer much decrease in readability while the sample not containing the leached sodium chloride suffered a marked decrease in readability.

It can thus be seen that the addition and subsequent leaching of the sodium chloride markedly improved the printability, mark permanency and non-smearing characteristics of the material.

## Example 3

A dual-wall heat recoverable tubing article was produced in the following manner. A 21 mil thick inner layer of the standard polyethylene composition in Example 1(i.e. without the sodium chloride) was coextruded with a 5 mil thick outer layer consisting of a blend of 47 wt.% (34.4 vol%) of sodium chloride (having an average particle size of about 2 microns) and 53 wt % of the standard polyethylene composition. A further heat recoverable tubing article was made by extruding a 21 mil thick tube of the standard polyethylene composition.

Each of the tubings were radiation cross-linked with a dose of 17 Mrad and then bilaterally warm expanded to a size 3.5 times their original size. The cooling water during the extrusion and expansion processes leached out a substantial part of the sodium chloride from the outer layer of the dual-wall tubing. Each of the tubings were then partially recovered onto nylon bandoliers as disclosed in Evans U.S. Patent No. 3,894,731, discussed previously.

Marks were applied to these bandoliered tubings by a typewriter. Immediately after printing, the marks were rubbed to determine smearing. In the samples containing the leached sodium chloride there was no smearing at all immediately after printing while the samples not containing the sodium chloride smeared.

Mark permanency was then tested in the following manner. Each of the samples was immersed for 24 hours at 23°C in the following solvents: JP-4 fuel, Skydrol 500™, hydraulic fluid, aviation gasoline, lubricating oil, salt water (5% salt) and anti-icing fluid all of which are defined in Raychem Specification Rt1800/2. The samples were then tested for abrasion resistance and solvent resistance according to Military Specification MIL-M-81531 and Military Standard MIL-STD-202, each of which were described earlier. The dual-wall article containing the porous outer layer (from the leached sodium chloride) passed while the standard article containing no sodium chloride failed. In other words, the dual-wall article according to the invention demonstrated mark permanency while the standard article did not demonstrate such mark permanency.

## Example 4

A further dual-wall tubing article was produced in the following manner. A 21 mil thick inner layer of the standard polyethylene composition in Example 1 (i.e. without the sodium chloride) was coextruded with a 5 mil thick outer layer consisting of a blend of 48.3 wt% (32.1 vol%) of sodium carbonate ($Na_2CO_3$, having an average particle size of 2.6 microns) and 51.7 wt% of the standard polyethylene blend.

Each of the tubings were radiation cross-linked with a dose of 17 Mrad and then bilaterally warm expanded to a size 3.5 times their original size. The cooling water during the extrusion and expansion processes leached out a substantial part of the sodium chloride from the outer layer of the dual-wall tubing. Each of the tubings were then partially recovered onto nylon bandoliers as disclosed in Evans U.S: Patent No. 3,894,731, discussed previously.

A mark was then applied to the article and then immediately rubbed with a thumb. It was found that again there was no smearing of the mark. Subsequently, the surface of the material was abraded in the presence of dichloromethane (an organic solvent). It was found that there was not a marked decrease in the readability of the mark. This is to be compared with the undesirable results obtained with the standard polyethylene samples in Examples 1 to 3.

## Claims

1. A heat-recoverable article comprising:
   a first substantially non-porous, heat-recoverable polymeric layer bonded to a second substantially porous, absorbent, polymeric layer wherein:
   (a) at least the second layer is crosslinked; and
   (b) the second layer is relatively thinner than the first layer;
   and wherein the second layer contains pores large enough to capture the pigment particles of inks and dyes applied to it and is sufficiently absorbent with respect to inks or dyes such that an exposed surface thereof is capable of being marked with indicia or markings that are resistant to organic solvents, smearing and abrasion.

2. The article of claim 1, wherein the size of the pores is in the range of from 1 to 10 Microns.

3. The article of claim 1 or claim 2, wherein the second layer contains a quantity of leachable particulate material, the second layer having been previously leached to remove a portion of the particulate material.

4. The article of any preceding claim, wherein the volume porosity in the second layer is greatest on the surface farthest away from, and gradually decreases towards, the interface between the first and second layers.

5. The article of any preceding claim wherein the article is an extruded or co-extruded dual-wall tubing.

6. The article of any preceding claim wherein an exposed surface of the second layer contains indicia or markings thereon.

7. The article of any preceding claim wherein the second layer is bonded to a first surface of the first layer and a second surface of the first layer is coated with adhesive.

## Patentansprüche

1. Wärmerückstellbarer Gegenstand, der folgendes aufweist:

eine erste im wesentlichen porenfreie, wärmerückstellbare Polymerschicht, die mit einer zweiten im wesentlichen porösen, absorptionsfähigen Polymerschicht verbunden ist, wobei

(a) wenigstens die zweite Schicht vernetzt ist; und

(b) die zweite Schicht verhältnismäßig dünner als die erste Schicht ist;

und wobei die zweite Schicht Poren enthält, die groß genug sind, um die Pigmentteilchen von darauf aufgebrachten Druckfarben und Farbstoffen einzufangen, und in bezug auf Druckfarben oder Farbstoffe ausreichend absorptionsfähig ist, so daß eine freiliegende Oberfläche davon mit Kennzeichnungen und Markierungen versehen werden kann, die gegenüber organischen Lösungsmitteln, Abschmieren und Abrieb beständig sind.

2. Gegenstand nach Anspruch 1, wobei die Porengröße im Bereich von 1-10 μm liegt.

3. Gegenstand nach Anspruch 1 oder 2, wobei die zweite Schicht eine Menge von auslaugbarem teilchenförmigem Material enthält und die zweite Schicht zuvor ausgelaugt worden ist, um einen Teil des teilchenförmigen Materials zu entfernen.

4. Gegenstand nach einem der vorhergehenden Ansprüche, wobei die Volumenporosität in der zweiten Schicht an der von der Grenzfläche zwischen der ersten und der zweiten Schicht am weitesten entfernten Oberfläche am größten ist und allmählich zu der Grenzfläche hin abnimmt.

5. Gegenstand nach einem der vorhergehenden Ansprüche, wobei der Gegenstand ein extrudiertes oder coextrudiertes doppelwandiges Rohr ist.

6. Gegenstand nach einem der vorhergehenden Ansprüche, wobei eine freiliegende Oberfläche der zweiten Schicht Kennzeichnungen oder Markierungen trägt.

7. Gegenstand nach einem der vorhergehenden Ansprüche, wobei die zweite Schicht mit einer ersten Oberfläche der ersten Schicht verbunden und eine zweite Oberfläche der ersten Schicht mit Kleber beschichtet ist.

## Revendications

1. Article doué de reprise dimensionnelle à chaud, comprenant :

une première couche polymérique douée de reprise dimensionnelle à chaud, pratiquement non poreuse, liée à une seconde couche polymérique absorbante, fortement poreuse ; dans lequel :

(a) au moins la seconde couche est réticulée ; et

(b) la seconde couche est relativement plus mince que la première couche ;

et dans lequel la seconde couche contient des pores suffisamment grands pour capturer les particules de pigments d'encres et de colorants appliqués à cette couche et est suffisamment absorbante vis-à-vis des encres ou des colorants pour qu'une surface à découvert de cette couche soit capable d'être marquée avec des signes ou des marques qui sont résistants aux solvants organiques, à l'étalement et à l'abrasion.

2. Article suivant la revendication 1, dans lequel le diamètre des pores est compris dans l'intervalle de 1 à 10 micromètres.

3. Article suivant la revendication 1 ou la revendication 2, dans lequel la seconde couche contient une quantité de matière lessivable en particules, la seconde couche ayant été soumise préalablement à un lessivage pour éliminer une partie de la matière en particules.

4. Article suivant l'une quelconque des revendications précédentes, dans lequel la porosité volumique dans la seconde couche est plus grande sur la surface éloignée de l'interface entre les première et seconde couches, et diminue progressivement vers cette interface.

5. Article suivant l'une quelconque des revendications précédentes, qui est un tube à double paroi extrudé ou coextrudé.

6. Article suivant l'une quelconque des revendications précédentes, dans lequel une surface à découvert de la seconde couche porte des signes ou des marques.

7. Article suivant l'une quelconque des revendications précédentes, dans lequel la seconde couche est liée à une première surface de la première couche et une seconde surface de la première couche est revêtue d'un adhésif.

FIG_1

FIG_2

*FIG_3*

*FIG_4*